# EUROPÄISCHE PATENTSCHRIFT

(11) **EP 0 319 509 B1**
(45) Veröffentlichungstag und Bekanntmachung des Hinweises auf die Patenterteilung: **31.08.1994**
(21) Anmeldenummer: 88890256.6
(22) Anmeldetag: 12.10.1988
(51) Int. Cl.: C12C 7/06

(54) **Vorrichtung zum Erwärmen von Braumaische**
Mash heater
Appareil pour chauffer la trempe

(30) Priorität: 10.11.1987 DE 3738185
(43) Veröffentlichungstag der Anmeldung: 07.06.1989
(73) Patentinhaber: O. SALM & CO Gesellschaft m.b.H., 1070 Wien (AT)
(72) Erfinder: Welledits, Walter, A-1070 Wien (AT)
(74) Vertreter: Atzwanger, Richard, Dipl.-Ing. Patentanwalt

(56) Entgegenhaltungen:
- DE-A- 1 914 594
- FR-A- 2 113 251
- RECKNAGEL-SPRENGER, "Taschenbuch für Heizung und Klimatechnik", 60.Ausgabe, 1979, R.Oldenbourg, München-Wien; Seiten 1262-1263#

## Beschreibung

Die gegenständliche Erfindung betrifft eine Vorrichtung zum Erwärmen von Braumaische in mindestens einem wendelförmig gekrümmten Rohr, welches von der Braumaische durchströmt ist und welches durch eine Wärmequelle erhitzbar ist.

Bei der Bierherstellung, welche sich in Malzebereitung, Würzebereitung und Vergären gliedert, ist es in einem der Verfahrensschritte erforderlich, die Maische, d.h. mit Brauwasser angerührtes, geschrotetes Malz, zum Abbau der restlichen Stärke in Zucker und Dextrin, kontrolliert auf eine vorbestimmte Temperatur zu bringen und auf dieser Temperatur über eine vorgegebene Zeitspanne zu halten. Dabei muß die Erwärmung so erfolgen, daß eine Schädigung von empfindlichen Stoffen vermieden wird. Zudem muß bei derartigen Verfahren die Wirtschaftlichkeit beachtet werden, weswegen die Erwärmung der Braumaische in einem sogenannten Außenkoch-System in verhältnismäßig kurzer Zeit durchführbar sein muß.

Für diesen Zweck sind Vorrichtungen bekannt, bei welchen als Wärmetauscher wendelförmig gekrümmte Rohre verwendet werden (DE-A-1 914 594). Derartige Wärmeaustauscher sind sehr leistungsfähig. Weiters kann über die Oberfläche der Rohre sehr einfach eine Anpassung der Wärmeübertragungsleistung an den jeweiligen Prozeß erfolgen. Es hat sich jedoch gezeigt, daß derartige bekannte Vorrichtungen nur in einem sehr engen Betriebsbereich nahe einer optimalen Heizleistung und einer daran angepaßten Strömungsgeschwindigkeit der Maische qualitativ hochwertig arbeiten. Da jedoch hierdurch die Anwendungsvielfalt bekannter Vorrichtungen stark eingeschränkt wird, liegt der gegenständlichen Erfindung die Aufgabe zugrunde, eine Vorrichtung zum Erwärmen von Braumaische, d.h. ein Außenkoch-System für Maische, zu schaffen, welche so ausgebildet ist, daß sie in einem stark erweiterten Betriebsspektrum, d.h. in einem erweiterten Feld von Heizleistung und Durchströmungsgeschwindigkeit, eine einerseits wirtschaftliche und andererseits möglichst schonende Erwärmung der Braumaische gewährleistet.

Dies wird erfindungsgemäß dadurch erzielt, daß das mindestens eine Rohr, welches innenseitig mit einer glatten Oberfläche ausgebildet ist, über eine Speiseleitung sowie über eine Rücklaufleitung an einen Zwischenbehälter angeschlossen ist, wobei sich in einer dieser beiden Leitungen eine Pumpe zur Förderung der Braumaische vom Zwischenbehälter durch das Rohr hindurch sowie in den Zwischenbehälter zurück befindet und daß weiters eine Steuereinrichtung vorgesehen ist, an welche die Ausgänge einer in der Rücklaufleitung vorgesehenen ersten Temperaturmeßstelle und einer im Zwischenbehälter vorgesehenen zweiten Temperaturmeßstelle angelegt sind und durch welche eine Steuerung der Pumpe bzw. eines in der Brennstoff-Zufuhrleitung vorgesehenen Ventils erfolgt. Vorzugsweise ist die Innenoberfläche des Rohres nahtlos poliert und ist das Rohr aus rostfreiem Stahl gefertigt.

Nach bevorzugten Ausführungsformen ist mittels der Steuereinrichtung die Strömungsgeschwindigkeit der Braumaische durch das mindestens eine Rohr hindurch in Abhängigkeit von der Temperaturänderung der Braumaische pro Zeiteinheit steuerbar. Weiters ist vorzugsweise eine Recheneinrichtung vorgesehen, durch welche in Abhängigkeit einer Vergleichsmessung der Temperatur der Braumaische vor Eintritt in den Zwischenbehälter und der Braumaische im Zwischenbehälter die Förderpumpe und bzw. oder das in der Brennstoffzufuhrleitung zum Brenner angeordnete Ventil steuerbar sind.

Brennstoffzufuhrleitung zum Brenner angeordnete Ventil steuerbar sind.

Die gegenständliche Erfindung ist nachstehend anhand von in der Zeichnung dargestellten Ausführungsbeispielen näher erläutert. Es zeigen:
- Fig. 1: eine schematische Schnittansicht einer ersten Ausführungsform der Vorrichtung zum Erwärmen von Braumai sche,
- Fig. 2: eine zweite Ausführungsform des Wärmeaustauschers die ser Vorrichtung und
- Fig. 3: eine dritte Ausführungsform des Wärmeaustauschers.

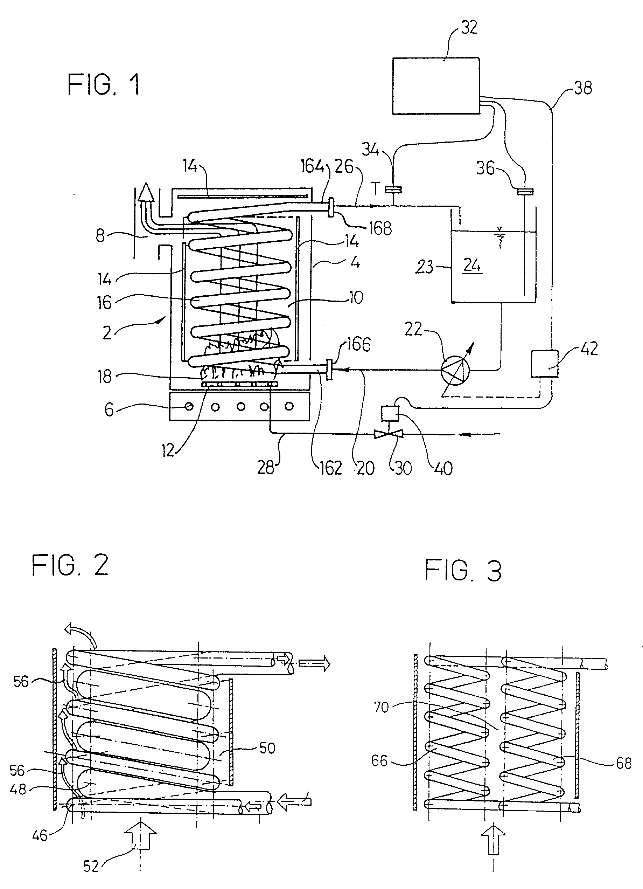

In Fig. 1 ist eine Vorrichtung 2 dargestellt, durch welche Braumaische nach einem vorbestimmten Erwärmungsablauf auf eine vorgegebene Temperatur erwärmbar ist. Diese Vorrichtung weist ein Gehäuse 4 auf, das beispielsweise zylindrisch ausgebildet ist. An der Unterseite des Gehäuses 4 sind Lufteintrittsöffnungen 6 vorgesehen und an der Oberseite ist ein Heizluft-Ablaßrohr 8 vorgesehen. Das Gehäuse 4 umschließt eine Heizkammer 10, unterhalb welcher ein Brenner 12, beispielsweise ein Gas- oder Ölbrenner, vorgesehen ist. Die Wandung des Gehäuses 4 ist durch Abschirmungen 14 gegenüber zu hohen Temperaturen geschützt.

Durch die Heizkammer 10 hindurch ist ein wendelförmig gekrümmtes Rohr 16 geführt, welches über gerade Abschnitte 162, 164 aus der Heizkammer 10 herausgeführt ist. In diesen Bereichen befinden sich Anschlüsse 166 und 168 für eine Zuleitung 20 bzw. für eine Ableitung 26 der Braumaische. Das wendelförmig gekrümmte Rohr 16 ist durch ein innenseitig nahtlos poliertes Rohr gebildet, das vorzugsweise aus nichtrostendem Stahl besteht.

Die zu erwärmende Braumaische 24 wird mittels einer regelbaren Pumpe 22 aus einem Zwischenbehälter 23 abgezogen und über den Abschnitt 162 dem wendelförmig gekrümmten Rohr 16 zugeführt, wobei die erwärmte Braumaische über den Abschnitt 164 und über die Rücklaufleitung 26 zum Zwischenbehälter 23 zurückgeleitet wird.

Die Speisung des Brenners 12 erfolgt über eine Heizmittel-Zuführleitung 28, in welcher sich ein Regelventil 30 befindet. Weiters ist eine zentrale Steuereinheit 32 vorgesehen, welcher die Ausgangssignale einer in der Rücklaufleitung 26 befindlichen ersten Temperatur-Meßstelle 34 und einer zweiten Meßstelle 36 für die Temperatur der im Zwischenbehälter 23 befindlichen Braumaische 24 zugeführt werden. Über einen in der zentralen Steuereinheit 32 vorgesehenen Rechner wird über eine Steuerleitung 38 ein Steuersignal an eine Stelleinrichtung der Pumpe 22 und bzw. oder an eine Stelleinrichtung 40 des Regelventils 30 abgegeben. Hierfür kann in die Steuerleitung 38 eine Verknüpfungseinheit 42 eingeschaltet sein, mit welcher auf die Ansteuerung der Pumpe 22 bzw. des Regelventils 30 zusätzlich Einfluß genommen werden kann. Dieses Prinzip der Regelung eignet sich sowohl für zwei- oder dreistufige Gas- oder Ölbrenner.
Noch exaktere Temperaturen können erzielt werden, wenn stufenlos regelbare Brenner eingesetzt werden. Vorzugsweise wird mittels des in der Steuereinheit vorgesehenen Rechners auch die Aufheizgeschwindigkeit der Braumaische erfaßt, um bereits frühzeitig Überhitzungen der Braumaische zu erkennen und zu verhindern.

Beim Durchströmen des wendelförmig gekrümmten Rohres 16 wird der Braumaische zunächst über Brennerflammen 18 und mit zunehmender Wegstrecke über die aufgeheizte Heizluft Wärme zugeführt. Über die Strömungsgeschwindigkeit und die Leistung des Brenners 12 kann die Temperaturdifferenz der Braumaische in den Abschnitten 162 und 164 gesteuert bzw. geregelt werden.

Es hat sich gezeigt, daß durch die in der Braumaische enthaltenen Spelzen selbst bei reduzierten Strömungsgeschwindigkeiten ein kontinuierlicher Selbstpoliereffekt bewirkte wird, wodurch Ablagerungen an der Innenseite des Rohres 16 und damit Überhitzungen von Bestandteilen der Braumaische verhindert werden.

Da im Strömungsweg der Braumaische keine Änderungen im Querschnitt auftreten, bleibt das Strömungsprofil auch bei starken Änderungen der Strömungsgeschwindigkeit stetig, wodurch Verwirbelungen im Heizbereich und dadurch hervorgerufene punktuelle Überhitzungen ausgeschlossen werden. Auf diese Weise wird eine sehr schonende und sehr leicht kontrollierbare Erwärmung der Braumaische auf die gewünschte Temperatur gewährleistet. Zudem ergibt sich durch die verlängerte Wärmeübertragungsstrecke selbst bei größten Brennerleistungen ein reduzierter, auf die Wegeinheit bezogener Temperaturgradient, wodurch die Gefahr von Überhitzungen zusätzlich verringert wird.

Die erfindungsgemäße Vorrichtung ist nicht auf das vorstehend beschriebene Ausführungsbeispiel beschränkt. So ist es beispielsweise möglich, daß anstatt des direkten Kontaktes der Brennerflamme 18 mit dem wendelförmig gekrümmten Rohr 16 ein Aufbau Anwendung findet, bei dem das Rohr 16 in einem mit Heißluft und bzw. oder heißem Dampf gespülten Heizraum angeordnet ist.

Es sind auch Variationen hinsichtlich der Anzahl, der Lage und der Größe der die Braumaische führenden Rohre möglich. Eine mögliche Variante besteht gemäß Fig. 2 darin, daß zwei wendelförmig gekrümmte Rohre 46 und 48 innerhalb einer Heizkammer 50 vorgesehen sind, welche gleichfalls eine Abschirmung für die nicht näher dargestellte Gehäusewandung aufweist. Die Strömung des beheizenden Mediums ist durch den Pfeil 52 dargestellt. Durch unterschiedlich große Pfeile die Aufteilung der Heizströmung innerhalb der Heizkammer 50 angedeutet, welche für eine gleichmäßige und allseitige Aufheizung der Rohre 46 und 48 sorgt.

Eine weitere Variante der Anordnung mehrerer wendelförmig gekrümmter Rohre ist in Fig. 3 dargestellt. Hierbei sind zwei Rohre 66 und 68 nebeneinander in einer gemeinsamen Heizkammer 70 vorgesehen. Auch bei dieser Ausführungsform erfolgt eine Aufteilung des Stromes des Heizmediums in die verschiedenen Bereiche der Heizkammer 70, wodurch eine intensive und möglichst gleichmäßige Beheizung der Rohre 66 und 68 erfolgt.

Die Erfindung ist auch nicht darauf beschränkt, daß das mindestens eine wendelförmig gekrümmte Rohr aus einem innenseitig polierten Rohr besteht. Vielmehr kann dieses mit einer Beschichtung versehen sein, welche unter der Einwirkung der in der Braumaische mitgeführten Spelzen ständig nachpoliert wird.

Durch die Erfindung ist somit eine Vorrichtung zum Erwärmen von Braumaische geschaffen, welche eine Wärmequelle und einen mit dieser in Wärmeübertragung stehenden und von Maische durchströmten Wärmeaustauscher aufweist. Der Wärmeaustauscher ist mit zumindest einem wendelförmig gekrümmten Rohr ausgebildet, welches innenseitig eine glatte Oberfläche aufweist. Durch die in der Braumaische enthaltenen Spelzen wird die Innenoberfläche des Rohres ständig nachpoliert, wodurch die Gefahr von Ablagerungen und Überhitzungen von Bestandteilen der Braumaische herabgesetzt ist.

Nachstehend sind konstruktive Daten zweier Ausführungsbeispiele von erfindungsgemäßen Vorrichtungen angegeben:

| Beispiel 1: | |
|---|---|
| Inhalt des Zwischenbehälters: | 10 hl |
| Rohrdurchmesser: | 32 mm |
| Rohrlänge (gestreckt) | 32 m |
| Geschwindigkeit der Maische im Rohr: | 2,5 m/sec |
| effektive Heizfläche: | 3,2 m² |

| Beispiel 2: | |
|---|---|
| Inhalt des Zwischenbehälters: | 16 hl |
| Rohrdurchmesser: | 40 mm |
| Rohrlänge (gestreckt) | 32 m |
| Geschwindigkeit der Maische im Rohr: | 2,6 m/sec |
| effektive Heizfläche | 4,0 m² |

## Patentansprüche

1. Vorrichtung zum Erwärmen von Braumaische in mindestens einem wendelförmig gekrümmten Rohr (16), welches von der Braumaische durchströmt ist und welches durch eine Wärmequelle (12) erhitzbar ist, dadurch gekennzeichnet, daß das mindestens eine Rohr (16), welches innenseitig mit einer glatten Oberfläche ausgebildet ist, über eine Speiseleitung (20) sowie über eine Rücklaufleitung (26) an einen Zwischenbehälter (23) angeschlossen ist, wobei sich in einer dieser beiden Leitungen (20, 26) eine Pumpe (22) zur Förderung der Braumaische (24) vom Zwischenbehälter (23) durch das Rohr (16) hindurch sowie in den Zwischenbehälter (23) zurück befindet und daß weiters eine Steuereinrichtung (32) vorgesehen ist, an welche die Ausgänge einer in der Rücklaufleitung (26) vorgesehenen ersten Temperatur-Meßstelle (34) und einer im Zwischenbehälter (23) vorgesehenen zweiten Temperatur-Meßstelle (36) angelegt sind und durch welche eine Steuerung der Pumpe (22) bzw. eines in der Brennstoff-Zufuhrleitung (28) vorgesehenen Ventils (30) erfolgt.

2. Vorrichtung nach Patentanspruch 1, dadurch gekennzeichnet, daß die Innenoberfläche des Rohres (16) nahtlos poliert ist.

3. Vorrichtung nach einem der Patentansprüche 1 und 2, dadurch gekennzeichnet, daß das Rohr (16) aus rostfreiem Stahl gefertigt ist.

4. Vorrichtung nach einem der Patentansprüche 1 bis 3, dadurch gekennzeichnet, daß mittels der Steuereinrichtung (32) die Strömungsgeschwindigkeit der Braumaische durch das Rohr (16) hindurch in Abhängigkeit von der Temperaturänderung der Braumaische pro Zeiteinheit steuerbar ist.

5. Vorrichtung nach einem der Patentansprüche 1 bis 4, dadurch gekennzeichnet, daß in der Steuereinrichtung (32) eine Recheneinrichtung vorgesehen ist, durch welche in Abhängigkeit einer Vergleichsmessung der Temperatur der Braumaische vor Eintritt in den Zwischenbehälter (23) und der Braumaische (24) im Zwischenbehälter (23) die Förderpumpe (22) und bzw. oder ein in der Brennstoffzufuhrleitung (28) zum Brenner (12) angeordnetes Ventil (30) steuerbar sind.

## Claims

1. A device for heating brewing mash in at least one helically curved pipe (16), through which the brewing mash flows and which may be heated by a heat source (12), characterized in that at least one tube (16), which is constructed on the inside with a smooth surface, is connected via a feed line (20) as well as via a return line (26) to an intermediate container (23), a pump (22) being positioned in one of these two lines (20, 26) for conveying the brewing mash (24) from the intermediate container (23) through the pipe (16) and back into the intermediate container (23) and in that in addition there is provided a control device (32), to which are connected the outlets of a first temperature measuring point (34) provided in the return line (26) and a second temperature measuring point (36) provided in the intermediate container (23) and through which there is effected control of the pump (22) or of a valve (30) provided in the fuel supply line (28).

2. A device according to claim 1, characterized in that the inner surface of the pipe (16) is seamlessly polished.

3. A device according to either one of claims 1 and 2, characterized in that the pipe (16) is made of stainless steel.

4. A device according to any one of claims 1 to 3, characterized in that the flow speed of the brewing mash through the pipe (16) is controllable by means of the control device (32) in dependence on the temperature alteration of the brewing mash per unit time.

5. A device according to any one of claims 1 to 4, characterized in that a computing apparatus is provided in the control device (32), by means of which computing apparatus the conveying pump (22) and or a valve (30) arranged in the fuel supply line (28) to the burner (12) may be controlled in dependence on a comparative measurement of the temperature of the brewing mash before entry into the intermediate container (23) and the brewing mash (24) in the intermediate container (23).

## Revendications

1. Dispositif pour le chauffage du moût de brassage dans au moins un tube (16) plié sous forme hélicoïdale, lequel est parcouru par ledit moût et pouvant être réchauffé par une source de chaleur (12), caractérisé en ce que, au moins, un tube (16), qui présente intérieurement une surface lisse, est raccordé par une conduite d'alimentation (20) ainsi que par une conduite de retour (26) à un récipient intermédiaire (23), tandis que, dans l'une de ces deux conduites (20, 26), se trouve une pompe (22) pour le refoulement du moût (24) du réservoir intermédiaire (23) à travers le tube (16) et, de nouveau, dans le réservoir (23), et en ce que, en outre, est prévu un dispositif de commande (32) auquel sont appliquées des sorties d'un premier point thermométrique (34) prévu dans la conduite de retour (26) et d'un deuxième point thermométrique (36) prévu à l'intérieur du réservoir intermédiaire (23) au moyen desquels s'effectue le pilotage de la pompe (22) ou le pilotage d'une vanne (30) prévue dans la conduite d'amenée du carburant (28).

2. Dispositif selon la revendication 1, caractérisé en ce que la surface intérieure du tube (16) est polie et ne présente pas de soudure.

3. Dispositif selon la revendication 1 ou 2, caractérisé en ce que le tube (16) est fabriqué en acier inoxydable.

4. Dispositif selon l'une des revendications 1 à 3, caractérisé en ce que, au moyen du dispositif de commande (32), la vitesse de circulation du moût de brassage à travers le tube (16) peut être réglée en fonction de la variation de la température dudit moût par unité de temps.

5. Dispositif selon l'une des revendications 1 à 4, caractérisé en ce que, dans le dispositif de commande (32), est prévue une unité de calcul au moyen de laquelle il est possible de piloter la pompe du refoulement (22) et/ou une vanne (30) disposée dans la conduite (28) amenant le carburant au brûleur (12), ce pilotage s'effectuant en fonction d'une mesure comparative de la température du moût avant son entrée dans le réservoir intermédiaire (23) et celle du moût (24) se trouvant à l'intérieur dudit réservoir intermédiaire (23).
